# EUROPÄISCHE PATENTSCHRIFT

(11) **EP 1 982 800 B1**
(45) Veröffentlichungstag und Bekanntmachung des Hinweises auf die Patenterteilung: **13.01.2010**
(21) Anmeldenummer: 08154641.8
(22) Anmeldetag: 16.04.2008
(51) Int. Cl.: B25J 9/10, B25J 9/12, B25J 15/00, B25J 15/10, A61F 2/58

(54) **Elektromechanische Greifeinrichtung**
Electro-mechanical gripping device
Appareil de préhension électromécanique

(30) Priorität: 20.04.2007 DE 102007019753
(43) Veröffentlichungstag der Anmeldung: 22.10.2008
(73) Patentinhaber: Schunk GmbH & Co. KG Spann- und Greiftechnik, 74348 Lauffen am Neckar (DE)
(72) Erfinder: Tschakarow, Sawa, 15366 Neuenhagen (DE)
(74) Vertreter: Gulde, Klaus W.

(56) Entgegenhaltungen:
- EP-A- 0 146 783
- US-A- 4 600 355
- US-A- 4 678 952
- US-A- 4 865 376
- US-A- 4 921 293
- US-A- 5 437 490

## Beschreibung

Die Erfindung betrifft eine elektromechanische Greifeinrichtung mit zwei Antriebseinheiten, mit denen jeweils eine rotatorisch bewegliche Abtriebseinheit gekoppelt ist und die des Weiteren eine Trägereinheit zur Befestigung der Antriebs- und Abtriebseinheiten umfasst, wobei die Abtriebseinheiten derart ausgestaltet sind, dass an ihnen jeweils mindestens ein Greifelement zum form- und/oder kraftschlüssigen Angreifen an ein zu greifendes Objekt anschließbar ist.

Insbesondere im Bereich der Service-Robotik werden Greifer am Ende von Roboterarmen benötigt, mit denen flexibel, schnell und positionsgenau Greifoperationen realisiert werden können. Das zu greifende Objekt muss dabei sicher im Greifer fixiert sein und darf nicht durch einzelne Greifelemente beschädigt bzw. zerquetscht werden. Mit dem Greifer sollen, ähnlich wie bei der menschlichen Hand, mehrere Griffpositionen am zu greifenden Objekt realisiert werden können. Des Weiteren besteht die Forderung nach einer geringen Masse des Greifers, um ein gewichtskraftbedingtes Hebelmoment am Ende eines Roboterarms gering zu halten.

Auf dem Gebiet der Greifer sind z.B. Einrichtungen bekannt, die eine Antriebseinheit umfassen, deren Drehbewegung auf zwei Greifbacken übertragen wird. Mittels des Antriebes lassen sich somit die Greifer wie Schenkel einer Zange auseinander und aufeinander zubewegen. Nachteilig an dieser Ausführungsform ist, dass bei starrer Anordnung des Greifers an einem Gelenkarm eines Roboters die Position zumindest eines gelenkigen Abschnittes des Gelenkarmes bzw. die Position des gesamten Gelenkarmes dann verändert werden muss, wenn das zu greifende Objekt in einer Position des Roboterarmes, die der linearen Verbindung zwischen dem zu greifenden Objekt und der Befestigung des Roboterarmes entspricht, nicht gegriffen werden kann. Der Roboterarm muss in einer solchen Situation zeitlich ausgeschwenkt werden, um den zu greifenden Gegenstand aus einer anderen Winkelposition heraus zu greifen. Des Weiteren ist mit diesem herkömmlichen Greifer ein Transport des gegriffenen Gegenstandes nur durch eine Bewegung des Roboterarmes bzw. eines Abschnittes des Roboterarmes möglich. Außerdem ist die Einstellung der Greifkraft durch die Anordnung des Antriebes, der auf beide Greifbacken wirkt, nur mit erhöhtem konstruktiven Aufwand möglich.

Aus dem Dokument DE 103 46 271 A1 ist eine Roboterhand bekannt, bei der einzelne Antriebseinheiten jeweils einen schwenkbaren Finger betätigen. Die schwenkbaren Finger sind dabei nebeneinander und zueinander beabstandet angeordnet. Dieser konstruktive Aufbau führt zu einem relativ hohen Volumen der Roboterhand und damit zu einer Erhöhung des Gewichtes. Der gegriffene Gegenstand ist fest zwischen den einzelnen Fingern fixiert, d.h., dass im fixierten Zustand keine Bewegung des gegriffenen Objektes an bzw. in der Roboterhand möglich ist.

Die US-A-4 600 355 entspricht dem Oberbegriff des Anspruchs 1, eine der Abtriebseinheiten ist mit den Achselement verbunden.

Die Aufgabe der vorliegenden Erfindung ist es, eine konstruktiv einfache, ein geringes Volumen und geringes Gewicht aufweisende Greifeinrichtung zur Verfügung zu stellen, die bei einstellbarer, hoher Greifkraft in ihrer Einsetzbarkeit variabel ist.

Die Aufgabe wird erfindungsgemäß durch die im Anspruch 1 genannten Merkmale der elektromechanischen Greifeinrichtung gelöst. Vorteilhafte Ausgestaltungen sind in den Unteransprüchen angegeben.

Es wird eine elektromechanische Greifeinrichtung mit zwei Antriebseinheiten zur Verfügung gestellt, bei der jeweils eine Antriebseinheit mit einer rotatorisch beweglichen Abtriebseinheit gekoppelt ist. Des Weiteren weist die erfindungsgemäße elektromechanische Greifeinrichtung eine Trägereinheit zur Befestigung der Antriebs- und Abtriebseinheiten auf, wobei die Abtriebseinheiten derart ausgestaltet sind, dass an ihnen jeweils mindestens ein Greifelement zum form- und/oder kraftschlüssigen Angreifen an ein zu greifendes Objekt anschließbar sind. Die beiden Abtriebseinheiten sind dabei derart angeordnet, dass sie um ein gemeinsames Achselement rotierbar sind. D.h., dass beide Abtriebseinheiten nicht nur auf einer idellen Drehachse rotieren, sondern dass sie auch auf einem materiell vorhandenen Achselement drehbar angeordnet sind. Der Vorteil dieser Ausführungsform besteht darin, dass sich eine sehr platzsparende Anordnung der Abtriebseinheiten und eine einfache Konstruktion der gesamten Greifeinrichtung ergibt, da die gemeinsame Achse nur zwei Lagerungen an ihren Endpunkten benötigt. Dadurch ergibt sich eine günstigere Krafteinleitung vom Achselement auf die Trägereinheit, wodurch die gesamte Greifeinrichtung in ihrem Aufbau geringer dimensioniert werden und damit leichter ausgeführt werden kann.
Vorteilhafterweise ist die elektromechanische Greifeinrichtung derart ausgestaltet, dass die beiden Abtriebseinheiten unmittelbar nebeneinander gelagert sind. D.h., dass die beiden Abtriebseinheiten auf dem gemeinsamen Achselement mit einem minimalen Abstand zueinander nebeneinander angeordnet sind. Die Abtriebseinheiten können dabei einander berühren oder einen Abstand von ein bis zwei Millimeter zueinander aufweisen.

Vorteilhafterweise ist weiterhin vorgesehen, dass die Trägereinheit teilbar ist. Diese Teilbarkeit ist bevorzugt symmetrisch in der Greifeinrichtung ausgeführt, d.h., dass an einer jeden Hälfte der Trägereinheit jeweils eine Antriebs- und eine Abtriebseinheit angeordnet ist. Diese Ausgestaltung dient im Wesentlichen der besseren Wartungs- und Austauschmöglichkeit von eventuell beschädigten Baueinheiten. Durch die Teilbarkeit der Trägereinheit lässt sich in einfacher Weise eine z.B. beschädigte Antriebseinheit zusammen mit der daran gekoppelten Abtriebseinheit und der Hälfte der Trägereinheit von der anderen Trägereinheit lösen und austauschen. Somit lassen sich auch in ihrer Baugröße oder Leistung unterschiedliche Bestandteile der Greifeinrichtung leicht miteinander kombinieren.

Vorteilhafterweise ist vorgesehen, dass zumindest eine der Antriebseinheiten neben einem Antriebsmotor ein Getriebe zur Untersetzung der durch den Antriebsmotor erzeugten Drehbewegung auf die ihm zugeordnete Abtriebseinheit aufweist. Somit lässt sich z.B. eine Drehbewegung des Antriebsmotors mit sehr hoher Winkelgeschwindigkeit auf eine langsamere Drehbewegung der Abtriebseinheit mit einem höheren Drehmoment übertragen.

In bevorzugter Ausgestaltung ist dabei vorgesehen, dass das Getriebe ein Harmonic-Drive-Getriebe ist.

In einer weiteren, vorteilhaften Ausgestaltung der erfindungsgemäßen Greifeinrichtung ist vorgesehen, dass mindestens eine der Antriebseinheiten des Weiteren eine Getriebevorstufe zur Einleitung des Antriebsmotor-Drehmomentes in das Getriebe aufweist. Als eine solche Getriebevorstufe bietet sich ein Zahnriementrieb an. D.h., dass ein auf der Welle des Antriebsmotors befestigtes Ritzel mit einem Zahnriemen im Eingriff steht, der ebenfalls mit einem Antriebselement des Harmonic-Drive-Getriebes im Eingriff steht. Somit wird die Drehbewegung des Antriebsmotors nicht direkt in das Harmonic-Drive-Getriebe übertragen, sondern es ist ein weiteres Getriebe, wie z.B. ein Zahnriementrieb, dazwischengeschaltet. Diese Ausführungsform bietet sich insbesondere dann an, wenn eine weitere Untersetzung oder auch Übersetzung zwischen dem Antriebsmotor und dem Harmonic-Drive-Getriebe benötigt wird und/oder wenn aufgrund beengter Raumverhältnisse der direkte Anschluss der Motorwelle an das Harmonic-Drive-Getriebe ungünstig ist.

Zur weiteren Ausstattung der elektromechanischen Greifeinrichtung kann diese mindestens an einer der Antriebseinheiten eine mit der Getriebevorstufe zusammenwirkende Bremse und/oder ein Winkel-Mess-System aufweisen. In vorteilhafter Weise wirken die Bremse und das Winkel-Mess-System dabei ebenfalls mit dem Zahnriementrieb zusammen. D.h., dass durch den Eingriff der Bremse in den Zahnriementrieb eine Bewegung des Zahnriementriebs und somit auch der Abtriebseinheit gebremst und/oder verhindert werden kann. Durch die Anordnung des Winkel-Mess-Systems wird eine Erfassung der Wirkelposition der jeweiligen Abtriebseinheit ermöglicht.

Vorteilhafterweise ist das Achselement der elektromechanischen Greifeinrichtung erfindungsgemäß hohl ausgestaltet. Diese Ausführungsform hat den Vorteil, dass durch das hohle Achselement Kabel von außen in den Innenraum der erfindungsgemäßen Greifeinrichtung geleitet werden können.

Bevorzugt ist der Wellengenerator des Harmonic-Drive-Getriebes drehbar auf dem Achselement gelagert; das innenverzahnte Rad des Harmonic-Drive-Getriebes ist mit einer Abtriebseinrichtung fest verbunden und das verformbare Glockenteil des Harmonic-Drive-Getriebes ist mit der Trägereinheit fest verbunden. In dieser Ausgestaltung erfolgt somit die Einleitung des Drehmomentes vom Antriebsmotor oder von der Getriebevorstufe in das Harmonic-Drive-Getriebe über den Wellengenerator. Der Abtrieb des Harmonic-Drive-Getriebes ist dessen innenverzahntes Rad, welches mit der Abtriebseinheit verbunden ist.

Vorteilhafterweise ist die elektromechanische Greifeinrichtung derart ausgestaltet, dass ihre Trägereinheit Anschläge für die Drehbewegungsbegrenzung der Abtriebseinrichtungen ausbildet. D.h., dass sowohl die Abtriebseinrichtungen als auch die Trägereinheit Formelemente aufweisen, die bei einer bestimmten Position der jeweiligen Abtriebseinrichtung aneinander zur Anlage kommen und somit die weitere Drehbewegung der Abtriebseinrichtung verhindert.

Zur Steuerung und Regelung der Bewegungen der Abtriebseinrichtungen der elektromechanischen Greifeinrichtung weist diese des Weiteren mindestens eine Leistungs- und Steuerungselektronik, vorzugsweise im Inneren eines Gehäuses der Greifeinrichtung, auf. Es kann dabei vorgesehen sein, dass jede der Antriebseinheiten eine eigene Elektronik aufweist. Diese Leistungs- und Steuerungselektronik ist dabei derart ausgestaltet, dass mit ihr des Weiteren die Tätigkeit der Bremse steuerbar ist. Außerdem kann diese Elektronik derart ausgestaltet sein, dass mit ihr Messdaten mindestens eines der Winkel-Mess-Systeme auswertbar sind und entsprechend dieser Messdaten eine Regelung der Antriebsbewegung und/oder der Bremswirkung durchführbar ist. Dabei weist die Leistungs- und Steuerungselektronik vorteilhafterweise eine serielle Schnittstelle auf, mittels derer eine Kommunikation zwischen der Steuerungseinheit der Elektronik und einer übergeordneten Steuerung, wie z.B. einer Robotersteuerung, ermöglicht werden kann. Über diese Schnittstelle können somit Daten zwischen der Zentrale und der Leistungs- und Steuerungselektronik ausgetauscht werden. Es können vom Winkel-Mess-System ermittelte Winkeldaten an die Zentrale übermittelt werden und es können von der Zentrale an die Leistungs- und Steuerungselektronik Daten zur Steuerung der Drehgeschwindigkeit und Drehrichtung der Antriebsmotore übermittelt werden.

Vorteilhafterweise ist die Leistungs- und Steuerungselektronik des Weiteren derart ausgestaltet, dass in ihr Datensätze für bestimmte Greifroutinen speicherbar sind. In dieser Ausgestaltung ist es möglich, mittels eines von der Zentrale an die Leistungs- und Steuerungselektronik gesendeten Signals eine der Greifroutinen zu aktivieren, so dass die erfindungsgemäße Greifeinrichtung einen bestimmten Ablauf vorherbestimmter Bewegungen der Abtriebseinheiten durchführt.

Mittels der Leistungs- und Steuerungselektronik lässt sich somit die Leistungseinspeisung der Motore steuern und regeln und die Greifkrafteinstellung über die Stromregelung der Antriebe realisieren, die Positionssteuerung der Greifelemente vornehmen und die Winkel-Mess-Systeme und die Bremsen intelliegent ansteuern bzw. deren ausgebene Information rechnerisch verwerten.

Insgesamt wird damit eine Greifeinrichtung zur Verfügung gestellt, mit der ein Gegenstand in nahezu jeder beliebiegen Winkelposition eines Greifarmes, an dem die Greifeinrichtung befestigt ist, gegriffen werden kann. Jedem Greiferfinger, der an einer der Abtriebseinheiten angeordnet ist, ist eine Steuerung zugeordnet. Somit lässt sich jede Abtriebseinheit bzw. der daran befestigte Greiferfinger mittels der Steuerung einzeln betätigen und hinsichtlich seiner Position im Raum, seiner Geschwindigkeit und seiner Greifkraft einstellen. Ein gegriffener Gegenstand kann in der Greifeinrichtung verschwenkt werden, d.h., dass bei Fixierung des Greifarmes das gegriffene Objekt alleine nur duch die Bewegung der Greifelemente bewegt werden kann. Es sind Innen- und Außengreifungen durchführbar.
Des Weiteren ist es auch möglich, dass ein Greifelement in einer bestimmten Position fixiert ist und das andere Greifelement verfährt und somit ein Gegenstand zwischen den Greifelementen eingeklemmt wird, was insbesondere dann wichtig sein kann, wenn der zu greifende Gegenstand nicht über eine bestimmte Position in einer bestimmten Richtung hinaus bewegt werden darf. Durch die unmittelbare Nähe der Greifelemente zueinander können von diesen in einfacher konstruktiver Erweiterung auch Scherprozesse durchgeführt werden.

Die Erfindung wird nachfolgend anhand der beiliegenden Zeichnungen beschrieben.

Es zeigen dabei
- Fig. 1:: die elektromechanische Greifeinrichtung in perspektivischer Ansicht ohne Gehäuse,
- Fig. 2:: die elektromechanische Greifvorrichtung in perspektivischer Ansicht mit Gehäuse,
- Fig. 3:: die elektromechanische Greifeinrichtung in Ansicht von vorn,
- Fig. 4:: die elektromechanische Greifeinrichtung in Ansicht von der Seite,
- Fig. 5:: die elektromechanische Greifeinrichtung in Ansicht von der Seite ohne Gehäuse,
- Fig. 6:: die elektromechanische Greifeinrichtung in einer Ansicht entlang des Schnittes A-A aus Fig. 5,
- Fig. 7:: die elektromechanische Greifeinrichtung in einer Ansicht entlang des Schnittes B-B aus Fig. 3,
- Fig. 8:: die elektromechanische Greifeinrichtung in einer Ansicht entlang des Schnittes C-C aus Fig. 3.

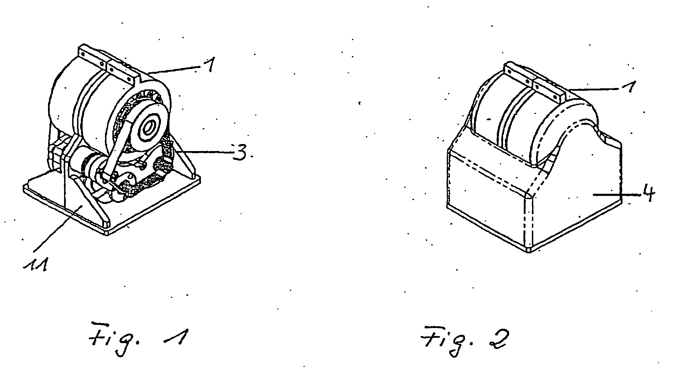

Fig. 1 zeigt in perspektivischer Ansicht in Zusammenbaudarstellung die erfindungsgemäße elektromechanische Greifeinrichtung. Diese ist symmetrisch auf zwei aneinander benachbart angeordneten Trägereinheiten 11 aufgebaut. Es ist ersichtlich, dass die Abtriebseinheiten 1 im Wesentlichen zylinderförmig aufgebaut und koaxial zueinander angeordnet sind. Die Abtriebseinheiten 1 weisen Anschlusselemente zum Anschließen speziell ausgeformter Greifelemente auf. Das von einer Antriebseinheit aufgebrachte Antriebs-Drehmoment wird durch den Zahnriementrieb 3 auf die Abtriebseinheit 1 übertragen. Dadurch, dass jede Abtriebseinheit 1 eine eigene Antriebseinheit 2 aufweist, ist es möglich, beide Abtriebseinheiten 1 gleichsinnig oder auch gegensinnig rotieren zu lassen. Es ist somit in einfacher Weise ein Einklemmen eines zu greifenden Objektes zwischen den beiden Greiferbacken, die an jeweils einer der Abtriebseinheiten 1 befestigt sind, möglich. Dieses Greifen kann durch eine Kontaktierung der Greiferbacken an der Außen-Oberfläche des zu greifenden Objektes erfolgen. Ein hohles Objekt, wie z.B. ein Hohlzylinder kann auch durch ein gegensinniges Verfahren der Abtriebseinheiten 1 bzw. der an diesen Abtriebseinheiten 1 angeschlossenen Greifer erreicht werden, so dass die Greiferbacken an der Innen-Oberfläche des hohlen Elementes zur Anlage kommen. Ein weiterer Vorteil der erfindungsgemäßen Ausgestaltung besteht darin, dass beide Abtriebseinheiten 1 gleichsinnig und in der selben Geschwindigkeit verfahren werden können. Das bedeutet, dass ein mit den Abtriebseinheiten 1 gegriffener Gegenstand um die gemeinsame Drehachse herum geschwenkt werden kann. Somit ist es möglich, z.B. auf der einen Seite der erfindungsgemäßen Greifeinrichtung ein Objekt zu greifen, dieses um die Rotationsachse herumzuschwenken und auf der anderen Seite abzulegen.

Fig. 2 zeigt die erfindungsgemäße Greifeinrichtung mit einem Gehäuse 4. Dieses Gehäuse 4 deckt die erfindungsgemäße Greifeinrichtung bis auf den Bereich der Rotation der Abtriebseinheiten 1 ab.

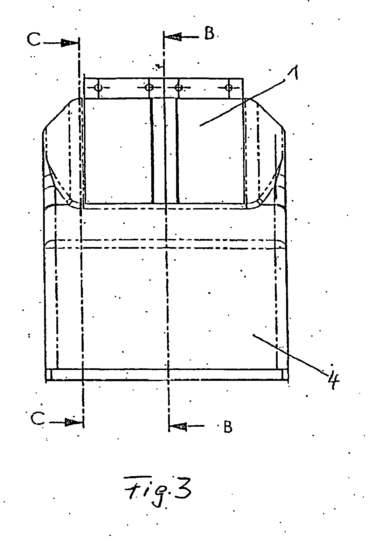

In Fig. 3 ist die Greifeinrichtung in Ansicht von vorn dargestellt, wobei ersichtlich ist, dass diese im Wesentlichen, zumindest im Bereich der Abtriebseinheiten 1, symmetrisch ausgestaltet ist.

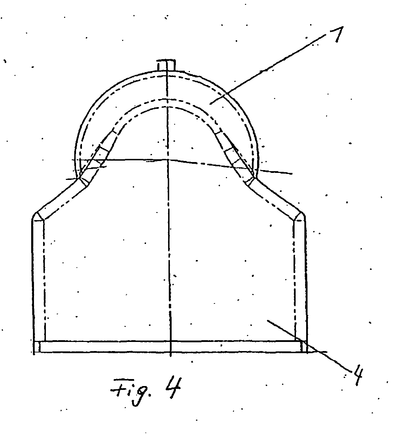

Fig. 4 zeigt die in Fig. 3 dargestellte Greifeinrichtung mit Gehäuse in Ansicht von der Seite.

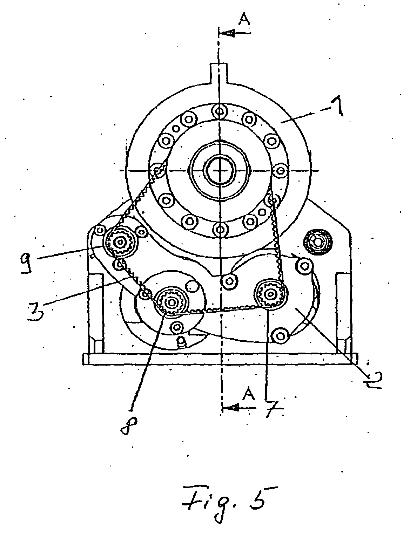

In Fig. 5 ist die selbe Darstellung wie in Fig. 4 gezeigt, bei der die erfindungsgemäße Greifeinrichtung kein Gehäuse 4 aufweist. Deutlich ist der Zahnriementrieb 3 ersichtlich, der mit den einzelnen Elementen einer Antriebseinheit 2, dem Motor 7, der Bremse 9 und dem Winkel-Mess-System 8 zusammenwirkt. Es sind dabei in Fig. 5 die jeweiligen Ritzel auf Wellen vom Motor 7, Winkel-Mess-System 8 und Bremse 9 dargestellt, die mit dem Zahnriementrieb 3 zusammenwirken. Die translatorische Bewegung des Zahnriementriebs wird in eine Drehbewegung der Abtriebseinheit 1 umgewandelt.

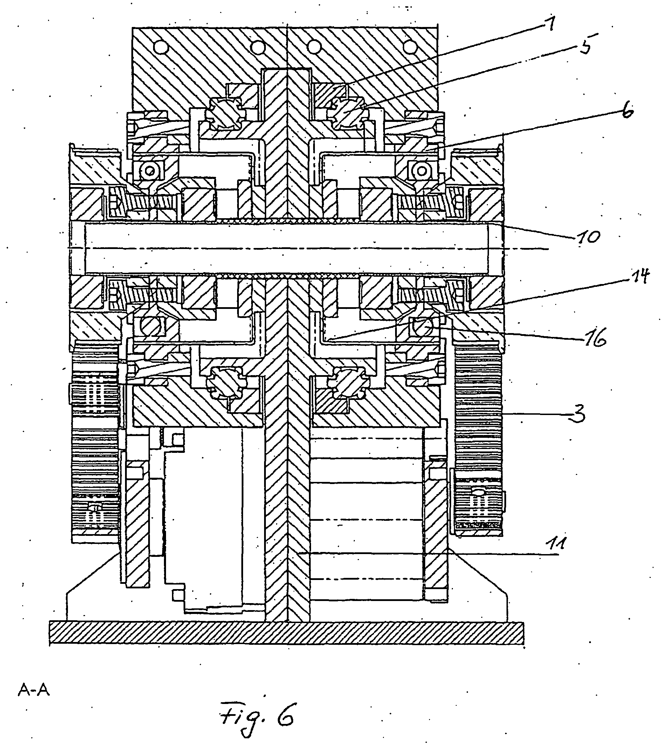

Fig. 6 zeigt einen mittigen Schnitt durch die elektromechanische Greifeinrichtung, in der deren Einzelteile erkennbar sind. Es ist ersichtlich, dass die Greifeinrichtung im Wesentlichen symmetrisch aufgebaut ist. Auf der Trägereinheit 11 sind alle wesentlichen Komponenten der Greifeinrichtung angeordnet. Die Trägereinheit 11 ist dabei ebenfalls symmetrisch und teilbar ausgeführt. Die Antriebseinheiten 2 sind jeweils mittels Vierpunktlager 5 an den Trägereinheiten 11 gelagert. Das Vierpunktlager 5 wird jeweils durch einen Gewindering 13 zusammengebaut und eingestellt. Mit jeder Abtriebseinheit 1 wirkt eine Antriebseinheit 2 zusammen. D.h., dass jede der Abtriebseinheiten 1 einzeln angetrieben wird. Der unmittelbare Antrieb einer Abtriebseinheit 1 erfolgt wie in Fig. 6 dargestellt über den Abtrieb eines Harmonic-Drive-Getriebes. Das verformbare Glockenteil 14 des Harmonic-Drive-Getriebes ist dabei fest mit einer Trägereinheit 11 verschraubt. Das innenverzahnte Rad 15 des Harmonic-Drive-Getriebes ist fest mit einer Abtriebseinheit 1 verbunden. Der Wellengenerator 16 des Harmonic-Drive-Getriebes ist auf dem feststehenden, hohl ausgeführten Achselement 10 drehbar gelagert und wird dort mittels des Zahnriementriebes 3 angetrieben. Unterhalb der Abtriebseinheiten befinden sich die Antriebseinheiten 2. Jede Antriebseinheit 2 besteht dabei aus einem Motor 7, vorzugsweise einem Elektromotor, einem Winkel-Mess-System 8 und einer Bremse 9. Wie bereits in den vorhergehenden Darstellungen gezeigt, ist der Motor 7, das Winkel-Mess-System 8, die Bremse 9 und die Abtriebseinheit 1 mittels jeweils eines Ritzels mit dem Zahnriementrieb im Eingriff.

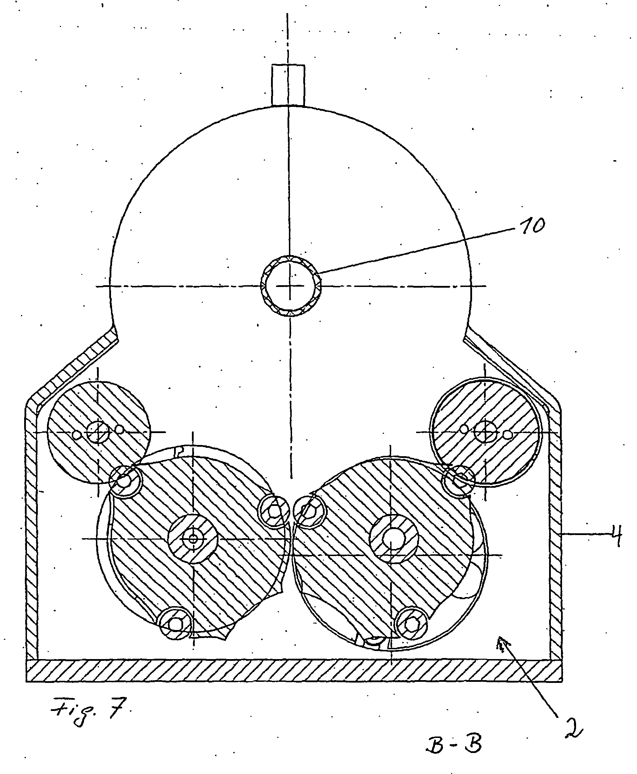

Fig. 7 zeigt in schematischer Darstellung die Positionen der Achsen der Abtriebseinheiten 1, die im Zentrum des Achselementes 10 verlaufen. Es ist ersichtlich, dass das Gehäuse 4 der elektromechanischen Greifeinrichtung die Komponenten der Antriebseinheiten 2 umfasst.

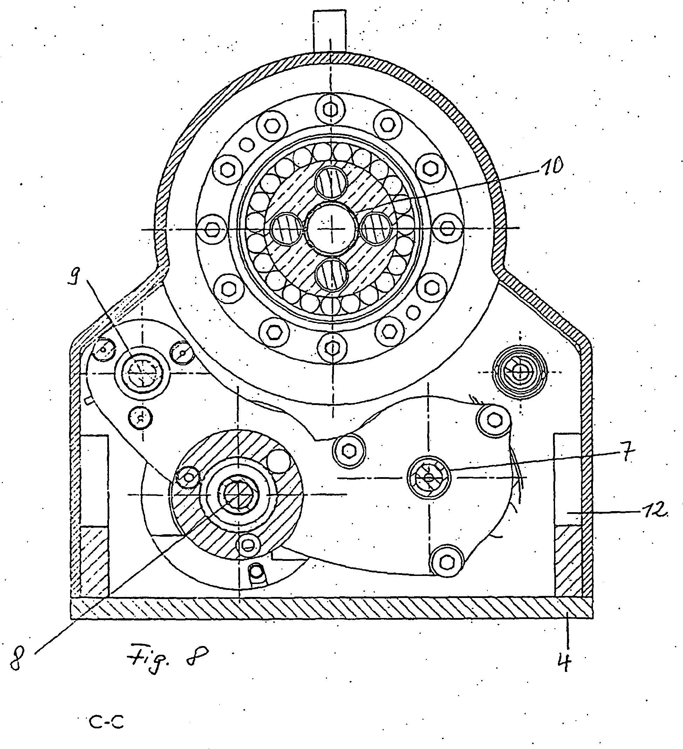

Eine ähnliche Darstellung zeigt Fig. 8, wobei deutlich die Achse des Antriebsmotors 7, die Achse des Winkel-Mess-Systems 8 und die Achse der Bremse 9 ersichtlich ist. Des Weiteren zeigt Fig. 8, dass ebenfalls im Gehäuse 4 die Leistungs- und Steuerungselektronik 12 zur Steuerung der Bewegungen der Abtriebseinrichtungen 1 angeordnet ist. Wie in Fig. 8 dargestellt, weist dabei die Greifeinrichtung jeweils eine einer An- bzw. Abtriebsvorrichtung zugeordnete Leistungs- und Steuerungselektronik 12 auf.

### Bezugszeichenliste

- 1: Abtriebseinheit
- 2: Antriebseinheit
- 3: Zahnriementrieb
- 4: Gehäuse
- 5: Vierpunktlager
- 6: Harmonic-Drive-Getriebe
- 7: Motor
- 8: Winkel-Mess-System
- 9: Bremse
- 10: Achselement
- 11: Trägereinheit
- 12: Leistungs- und Steuerungselektronik
- 13: Lagerring
- 14: verformbare Getriebeglocke
- 15: innenverzahntes Rad
- 16: Wellengenerator

## Patentansprüche

1. Elektromechanische Greifeinrichtung mit zwei Antriebseinheiten (2), mit denen jeweils eine rotatorisch bewegliche Abtriebseinheit (1) gekoppelt ist, und mit einer Trägereinheit (11) zur Befestigung der Antriebs- und Abtriebseinheiten, wobei die Abtriebseinheiten (1) derart ausgestaltet sind, dass an ihnen jeweils mindestens ein Greifelement zum form- und/oder kraftschlüssigen Angreifen an ein zu greifendes Objekt anschließbar sind,
**dadurch gekennzeichnet, dass**
die beiden Abtriebseinheiten (1) derart angeordnet sind, dass sie um ein gemeinsames Achselement (10) rotierbar sind.

2. Elektromechanische Greifeinrichtung nach Anspruch 1,
**dadurch gekennzeichnet, dass**
die beiden Abtriebseinheiten (1) unmittelbar nebeneinander gelagert sind.

3. Elektromechanische Greifeinrichtung nach einem der Ansprüche 1 bis 2,
**dadurch gekennzeichnet, dass**
die Trägereinheit (11) teilbar ist.

4. Elektromechanische Greifeinrichtung nach einem der vorhergehenden Ansprüche,
**dadurch gekennzeichnet, dass**
zumindest eine der Antriebseinheiten (2) neben einem Antriebsmotor (7) ein Getriebe (6) zur Untersetzung der durch den Antriebsmotor (7) erzeugten Drehbewegung auf die ihm zugeordnete Abtriebseinheit (1) aufweist.

5. Elektromechanische Greifeinrichtung nach Anspruch 4,
**dadurch gekennzeichnet, dass**
das Getriebe (6) ein Harmonic-Drive-Getriebe ist.

6. Elektromechanische Greifeinrichtung nach einem der Ansprüche 4 bis 5,
**dadurch gekennzeichnet, dass**
mindestens eine der Antriebseinheiten des Weiteren eine Getriebevorstufe zur Einleitung des Antriebsmotor-Drehmoments in das Getriebe (6) aufweist.

7. Elektromechanische Greifeinrichtn nach Anspruch 6,
**dadurch gekennzeichnet, dass**
mindestens eine der Antriebseinheiten des Weiteren eine mit der Getriebevorstufe zusammenwirkende Bremse (9) und/oder ein Winkel-Mess-System (8) aufweist.

8. Elektromechanische Greifeinrichtung nach einem der vorhergehenden Ansprüche,
**dadurch gekennzeichnet, dass**
das Achselement (10) hohl aufgestaltet ist.

9. Elektromechanische Greifeinrichtung nach einem der Ansprüche 5 bis 8,
**dadurch gekennzeichnet, dass**
der Wellengenerator 16 des Harmonic-Drive-Getriebes (6) drehbar auf dem Achselement (10) gelagert ist, das innenverzahnte Rad (15) des Harmonic-Drive-Getriebes mit einer Abtriebseinrichtung (1) fest verbunden ist und das verformbare Glockenteil (14) des Harmonic-Drive-Getriebes mit der Trägereinheit (11) fest verbunden ist.

10. Elektromechanische Greifeinrichtung nach einem der vorhergehenden Ansprüche,
**dadurch gekennzeichnet, dass**
die Trägereinheit (11) derart ausgestaltet ist, dass sie Anschläge für die Drehbewegungsbegrenzung der Abtriebseinrichtungen ausbildet.

11. Elektromechanische Greifeinrichtung nach einem der vorhergehenden Ansprüche,
**dadurch gekennzeichnet, dass**
sie des Weiteren mindestens eine Leistungs- und Steuerungselektronik (12) zur Steuerung der Bewegung der Antriebselemente (2) umfasst.

12. Elektromechanische Greifeinrichtung nach Anspruch 11,
**dadurch gekennzeichnet, dass**
die Leistungs- und Steuerungselektronik (12) derart ausgestaltet ist, dass mit ihr des Weiteren die Tätigkeit der Bremse (9) steuerbar ist.

13. Elektromechanische Greifeinrichtung nach einem der Ansprüche 11 bis 12,
**dadurch gekennzeichnet, dass**
mit der Leistungs- und Steuerungselektronik (12) Messdaten mindestens eines der Winkel-Mess-Systeme (8) auswertbar sind und entsprechend dieser Messdaten eine Regelung der Antriebsbewegung und/oder der Bremswirkung durchführbar ist.

14. Elektromechanische Greifeinrichtung nach einem der Ansprüche 11 bis 13,
**dadurch gekennzeichnet, dass**
in der Leistungs- und Steuerungselektronik (12) Datensätze für bestimmte Greifroutinen speicherbar sind.

## Claims

1. An electro-mechanical gripping device with two drive units (2), with which one rotationally movable output unit (1) is coupled in each case, and with a carrier unit (11) for attaching the drive and output units, wherein the output units (1) are designed in such a manner that at least one gripping element respectively can be connected to for form-fit and/or force-fit gripping of an object to be gripped
**characterized in that**
the two output units (1) are arranged in such a manner that they are rotatable around a shared axis element (10).

2. An electro-mechanical gripping device according to claim 1,
**characterized in that**
the two output units (1) are directly supported next to each other.

3. An electro-mechanical gripping device according to either of claims 1 and 2,
**characterized in that**
the carrier unit (11) can be divided.

4. An electro-mechanical gripping device according to any one of the preceding claims,
**characterized in that**
at least one of the drive units (2) comprises next to a drive motor (7) a gearbox (6) for gearing down the rotational movement generated by the drive motor (7) to the output unit (1) assigned to it.

5. An electro-mechanical gripping device according to claim 4,
**characterized in that**
the gearbox (6) is a harmonic drive gearbox.

6. An electro-mechanical gripping device according to either of claims 4 and 5,
**characterized in that**
at least one of the drive units furthermore comprises a gearbox pre-stage for leading the drive motor torque into the gearbox (6).

7. An electro-mechanical gripping device according to claim 6,
**characterized in that**
at least one of the drive units furthermore comprises a brake (9) which cooperates with the gearbox pre-stage, and/or an angle measurement system (8).

8. An electro-mechanical gripping device according to any one of the preceding claims,
**characterized in that**
the axis element (10) is hollow.

9. An electro-mechanical gripping device according to any one of claims 5 to 8,
**characterized in that**
the wave generator (16) of the harmonic drive gearbox (6) is supported rotatably on the axis element (10), the internally toothed wheel (15) of the harmonic drive gearbox is firmly connected to an output device (1), and the deformable cap part//Glockenteil (14) of the harmonic drive gearbox is firmly connected to the carrier unit (11).

10. An electro-mechanical gripping device according to any one of the preceding claims,
**characterized in that**
the carrier unit (11) is designed in such a manner that it forms stops for the rotational movement restriction of the output devices.

11. An electro-mechanical gripping device according to any one of the preceding claims,
**characterized in that**
it furthermore comprises at least one power and control electronic unit (12) for controlling the movement of the drive elements (2).

12. An electro-mechanical gripping device according to claim 11,
**characterized in that**
the power and control electronic unit (12) is designed in such a manner that furthermore the activity of the brake (9) can be controlled with it.

13. An electro-mechanical gripping device according to either of claims 11 and 12,
**characterized in that**
with the power and control electronic unit (12), measurement data from at least one of the angle measurement systems (8) can be evaluated and according to this measurement data, the drive movement and/or of the brake effect can be regulated.

14. An electro-mechanical gripping device according to any one of claims 11 to 13,
**characterized in that**
in the power and control electronic unit (12), data records for specific gripping routines can be stored.

## Revendications

1. Appareil de préhension électromécanique avec deux unités d'entraînement (2) avec lesquelles une unité de sortie (1) mobile en rotation est respectivement couplée, et avec une unité porteuse (11) pour la fixation des unités d'entraînement et de sortie, les unités de sortie (1) étant constituées de sorte qu'au moins un élément de préhension peut leur être respectivement raccordé en vue de la préhension mécanique et/ou par friction sur un objet à agripper,
**caractérisé en ce que**
les deux unités de sortie (1) sont disposées de telle sorte qu'elles peuvent tourner autour d'un élément axial (10) commun.

2. Appareil de préhension électromécanique selon la revendication 1,
**caractérisé en ce que**
les deux unités de sortie (1) sont supportées directement l'une à côté de l'autre.

3. Appareil de préhension électromécanique selon une des revendications 1 à 2,
**caractérisé en ce que**
l'unité porteuse (11) peut être divisée.

4. Appareil de préhension électromécanique selon une des revendications précédentes,
**caractérisé en ce que**
au moins une des unités d'entraînement (2) présente, outre un moteur d'entraînement (7), un engrenage (6) pour la réduction du mouvement de rotation produit par le moteur d'entraînement (7) sur l'unité de sortie (1) qui lui est affectée.

5. Appareil de préhension électromécanique selon la revendication 4,
**caractérisé en ce que**
l'engrenage (6) est un engrenage Harmonic-Drive.

6. Appareil de préhension électromécanique selon une des revendications 4 à 5,
**caractérisé en ce que**
au moins une des unités d'entraînement présente en outre un étage d'entrée d'engrenage pour l'introduction du couple de moteur d'entraînement dans l'engrenage (6).

7. Appareil de préhension électromécanique selon la revendication 6,
**caractérisé en ce que**
au moins une des unités d'entraînement présente en outre un frein (9) coopérant avec l'étage d'entrée d'engrenage et/ou un système de mesure angulaire (8).

8. Appareil de préhension électromécanique selon une des revendications précédentes,
**caractérisé en ce que**
l'élément axial (10) est réalisé de façon creuse.

9. Appareil de préhension électromécanique selon une des revendications 5 à 8,
**caractérisé en ce que**
l'alternateur monté sur l'arbre moteur (16) de l'engrenage Harmonic-Drive (6) est supporté en rotation sur l'élément axial (10), la roue à denture intérieure (15) de l'engrenage Harmonic-Drive est raccordée de façon fixe à un dispositif de sortie (1) et la cloche (14) déformable de l'engrenage Harmonic-Drive est raccordée de façon fixe à l'unité porteuse (11).

10. Appareil de préhension électromécanique selon une des revendications précédentes,
**caractérisé en ce que**
l'unité porteuse (11) est constituée de telle sorte qu'elle forme des butées pour la limitation du mouvement de rotation des dispositifs de sortie.

11. Appareil de préhension électromécanique selon une des revendications précédentes,
**caractérisé en ce**
**qu'**il comprend en outre au moins une électronique de puissance et de commande (12) pour la commande du mouvement des éléments d'entraînement (2).

12. Appareil de préhension électromécanique selon la revendication 11,
**caractérisé en ce que**
l'électronique de puissance et de commande (12) est constituée de telle sorte que, avec elle, l'opération du frein (9) peut en outre être commandée.

13. Appareil de préhension électromécanique selon une des revendications 11 à 12,
**caractérisé en ce que,**
avec l'électronique de puissance et de commande (12), des données de mesure d'au moins un des systèmes de mesure angulaire (8) peuvent être analysées et **en ce que**, en fonction de ces données de mesure, une régulation du mouvement d'entraînement et/ou de l'action de frein peut être effectuée.

14. Appareil de préhension électromécanique selon une des revendications 11 à 13,
**caractérisé en ce que,**
dans l'électronique de puissance et de commande (12), des jeux de données pour certaines routines de préhension peuvent être enregistrés.
